Europäisches Patentamt

European Patent Office

Office européen des brevets

(11) Veröffentlichungsnummer: **0 445 706 A2**

## (12) EUROPÄISCHE PATENTANMELDUNG

(21) Anmeldenummer: **91103243.1**

(22) Anmeldetag: **04.03.91**

(51) Int. Cl.5: **F16L 11/12**

(30) Priorität: **05.03.90 DE 4006870**

(43) Veröffentlichungstag der Anmeldung:
**11.09.91 Patentblatt 91/37**

(84) Benannte Vertragsstaaten:
**CH DE FR GB IT LI SE**

(71) Anmelder: **EMS-INVENTA AG
Selnaustrasse 16
CH-8001 Zürich(CH)**

(72) Erfinder: **Kerschbaumer, Franz, Dr. rer. nat.
Dipl.-Chem.
Masanserstrasse 147
CH-7000 Chur(CH)**

(54) **Mehrschicht-Kraftstoffleitungen.**

(57) Die Erfindung beschreibt eine kälteschlagzähe und längenstabile Kraftstoffleitung für Kraftfahrzeuge, die kurzzeitig thermisch überlastbar ist und die aus mindestens drei Schichten aus mindestens zwei verschiedenen, miteinander verträglichen Polyamidtypen besteht. Die erfindungsgemässe Kraftstoffleitung weist ferner bevorzugt eine Innen- und eine Aussenschicht aus schlagzähmodifiziertem Polyamid mit oder ohne Weichmachergehalt und eine Sperrschicht in der Mitte der Rohrwandung aus schlagzähmodifikatorfreiem Homopolyamid, Copolyamid oder deren Blends auf.

Die Erfindung befasst sich mit einer Kraftstoffleitung, die aus mehreren Polyamidschichten aufgebaut ist.

Seit langer Zeit werden in Kraftfahrzeugen Kraftstoffleitungen aus Polyamid 11 und 12 eingebaut.

Ein Nachteil solcher Rohrleitungen besteht darin, dass eine beträchtliche Permeation der gebräuchlichen Kraftstoffe durch die Wandungen solcher Leitungen gegeben ist, die im Hinblick auf die in den letzten Jahren aufgekommenen Umweltschutz- und Sicherheitsüberlegungen unerwünscht hoch ist.

Ein weiterer Nachteil bei solchen Rohrleitungen besteht in einem beträchtlichen Aufnahmevermögen der Polymeren für einzelne Bestandteile der Kraftstoffe, was zu Quellvorgängen und somit zu Längenänderungen in den Wandungen bzw. Wandschichten der Rohrleitungen führen kann. Dabei wirkt sich besonders nachteilig ein unterschiedliches Quellen in verschiedenen Wandungsteilen aus.

Es wurden deshalb Entwicklungen durchgeführt, um die aus einer einzigen homogenen Schicht Polyamid 11 oder Polyamid 12 bestehenden sogenannten Monorohre zu verbessern. Eine Verbesserungsmöglichkeit besteht in dem Übergang zu Mehrschichtrohren mit speziellen Barriere-Schichten aus Polymeren.

Aus der DE 35 10 395 C2 ist eine Kraftstoffleitung bekannt, bei der eine Zwischenschicht auf Basis Vinylalkohol mit Polyamid-Schichten verbunden werden. Die Haftung zwischen diesen Schichten ist jedoch so gering, dass sie leicht delaminieren. An den delaminierten Rohrenden können aggressive Chemikalien, wie Streusalz zwischen die Schichten eindringen. Zudem ist die Haftung an Fittingen mit Dornprofilen stark herabesetzt. Ausserdem ist die Kälteschlagzähigkeit solcher Rohre so niedrig, dass sie Kälteschlagtests gemäss ISO 7628 und SAE J 844d nicht bestehen können, weil die ausserordentlich brüchige Polyethylen-Vinylalkohol-Schicht in der Rohrleitungswand nach innen verlegt worden ist.

Weiterhin ist aus der DE 38 27 092 C1 eine Kraftstoffleitung bekannt, bei der thermoplastische Polyesterelastomere mit Polyamid und einer Polyethylen-Vinylalkohol-Innenschicht verbunden sind. Auch in diesem Fall besteht zwischen den Schichten ebenfalls nur eine geringe Haftung, so dass auch in diesem Fall die vorstehend beschriebenen Nachteile gegeben sind.

Aufgabe der Erfindung ist es deshalb, eine Kraftstoffleitung für Kraftfahrzeuge vorzuschlagen, die eine für die heutigen Umwelschutz- und Sicherheitsbestimmungen ausreichend geringe Permeation bei allen gebräuchlichen Kraftstoffen zeigt, ohne die vorstehend geschilderten Nachteile aufzuweisen.

Die Erfindung sieht zur Lösung dieser Aufgabe eine kälteschlagzähe, längenstabile und kurzzeitig thermisch überlastbare Kraftstoffleitung für Kraftfahrzeuge vor, die aus mindestens drei Schichten aus mindestens zwei verschiedenen, miteinander vertäglichen Polyamidtypen besteht.

Eine erfindungsgemässe Kraftstoffleitung weist eine auch für die heutigen Umwelschutz- und Sicherheitsbestimmungen ausreichende Permeationsdichte auf, ist laminationsfrei, längenstabil und mit den in einem Motorraum von Kraftfahrzeugen üblicherweise auftretenden Temperaturen kurzzeitig überlastbar. Ausserdem ist sie kostengünstig in der Herstellung.

Bekannte Monorohre halten einer Berstdruckprüfung bereits bei 170°C nicht stand. Dagegen halten erfindungsgemässe mehrschichtige Rohrleitungen einem Berstdruck von 7 bar selbst bei 180°C kurzzeitig, d.h. 1 bis 2 Stunden stand. Dies hat eine erhebliche Bedeutung für die Sicherheit von Kraftstoffleitungen in Fällen, in denen sich der Motor kurzzeitig überhitzt, beispielsweise wenn das Kühlsystem aufgrund eines Defektes zu kochen beginnt.

Es wurden überraschenderweise gefunden, dass die Kälteschlagzähigkeit einer mehrschichtigen Kraftstoffleitung sehr hoch sein kann, wenn die spröde Barriereschicht die Mittelschicht der Rohrleitung bildet. Die Schlagzähigkeit der Rohrleitung wird in diesem Fall durch die Schlagzähigkeit der Innen- und Aussenschicht bewirkt.

Es wurde weiter gefunden, dass sich unmodifiziertes Polyamid 66 und Polyamidelastomere auf Basis von Polyamid 12 hervorragend als Barriereschicht eignen. Diese Barrierewirkung in Kraftstoffleitungen wird besonders gegen die aromatischen, meist stark toxischen Bestandteile der Kraftstoffe gefordert. Darin ist Polyamid 66 dem Polyamid 6 und besonders dem Polyamid aus langkettigen Monomeren, wie PA 11, PA 12 und PA 12,12, überlegen.

Polyamid 66 ist mit Polyamid 6 einerseits und Polyamid 11 oder 12 andererseits so verträglich, dass an den erfindungsgemässen Rohrleitungen aus solchen Schichten keine Delaminierung beobachtet werden konnte. Dies wurde auch für Polyamidelastomere auf Basis von Polyamid 12 beobachtet, die mit Copolyamiden auf Basis der Monomeren von Polyamid 6 und Polyamid 12 zu Blends verarbeitet worden waren.

Erfindungsgemäss werden deshalb mehrschichtige Kraftstoffleitungen vorgeschlagen, deren Aussenschicht aus schlagzähmodifizierten Polyamid-Typen, die Weichmacher enthalten können, und deren Sperr-Mittelschicht aus schlagzähmodifikatorfreiem Polyamid, bevorzugt aus Polyamid 6,6 oder aus Blends aus Polyamidelastomeren, bevorzugt Polyetheresteramid auf Basis der Monomeren des Polyamid 11 oder 12 mit Copolyamiden bestehen.

2

Für letztere sind besonders Copolyamide aus den Monomeren mit 6, 11 oder 12 C-Atomen geeignet.

Die Innenschicht solcher Rohrleitungen besteht bevorzugt aus Polyamid 6, das in besonders bevorzugter Weise ebenfalls schlagzähmodifiziert sein kann.

Besonders bevorzugt sind Kombinationen, die innen aus wahlweise schlagzähmodifiziertem Polyamid 6 und aussen aus schlagzähmodifiziertem Polyamid 6, 11, 12 oder 12,12 bestehen. Dabei hat eine weitere bevorzugte Ausführungsform in Innen- und Aussenschicht etwa die gleiche Schichtdicke, die in der Praxis zwischen 0,2 bis 1,0 mm liegt. Für die Sperrschichten genügen Dicken von 5 bis 25% der Gesamtwandstärke. Damit sind für die Sperrschicht Dicken von 0,1 bis 0,5 mm besonders bevorzugt.

Die erfindungsgemässen Kraftstoffleitungen können selbstverständlich aus mehr als 3 Schichten aufgebaut sein, wenn das Prinzip der schlagzähmodifizierten Aussenschicht und einer Sperrschicht zwischen Innen- und Aussenschicht(en) gewahrt und die Verträglichkeit der Schichtmaterialien gewährleistet ist.

Solche erfindungsgemässe koextrudierte Kraftstoffleitungen sind sowohl bezüglich ihrer Kälteschlagfestigkeit nach SAE J 844d und ISO 7628 als auch bezüglich ihrer Treibstoffpermeation geprüft worden.

Die Resultate der Kälteschlagprüfungen sind in Tabelle 1 wiedergegeben. Sie wurden an Rohren mit einem Aussendurchmesser von 8 mm und einer Wandstärke von 1 mm durchgeführt, deren Schichtaufbauten der Tabelle 1 entnommen werden können. Die in der Tabelle 1 angegebenen Polyamid-Typen sind:

```
GRILON     XE3139    ein schlagzähmodifiziertes PA 6

GRILON     T300 GM   ein schlagzähmodifikatorfreies PA 66

GRILAMID   ELY20NZ   ein schlagzähmodifiziertes Polyamid-
                     elastomer

GRILON     CA6E      ein amorphes Copolyamid auf Basis
                     Caprolactam/Laurinlactam

GRILAMID   XE3148    ein schlazähmodifiziertes PA 12
```

Die vorstehend angegebenen Polyamid-Typen sind Handelstypen der Firma EMS-CHEMIE AG, Zürich, Schweiz. Das gleiche gilt für

```
GRILON     R47HW     ein hochviskoses, schlagzähmodifi-
                     ziertes PA 6 mit definiertem Weich-
                     machergehalt

GRILAMID   L25W20    ein semiflexibles mittelviskoses
                     Polyamid 12 mit definiertem Weich-
                     machergehalt

GRILAMID   L25W40    ein flexibles mittelviskoses
                     Polyamid 12 mit definiertem höheren
                     Weichmachergehalt
```

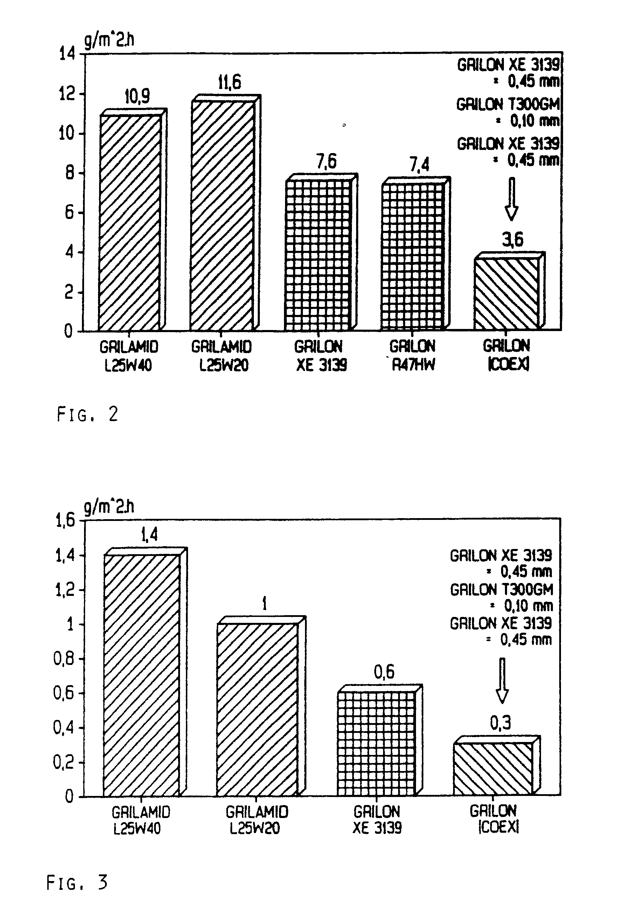

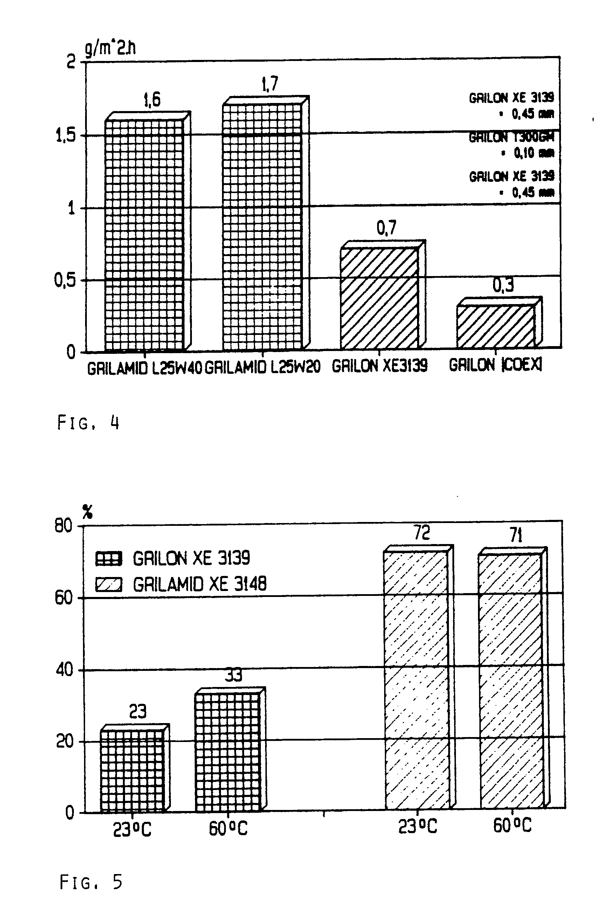

die zusätzlich bei den Versuchen gemäss den Figuren 2 bis 5 verwendet worden sind.

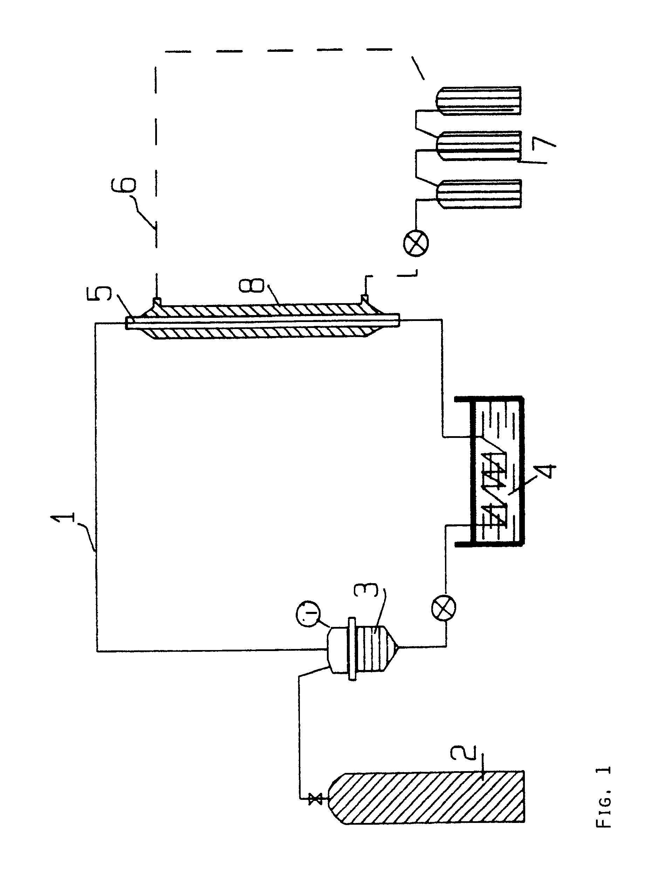

Für die Permeationsprüfungen wurde eine Anlage benutzt, deren Prinzipschema in der Figur 1 wiedergegeben ist.

Danach umfasst die Anlage einen Kraftstoffkreislauf 1, der einen Windkessel 3 enthält und durch eine Heizeinrichtung 4 und einen Rohrabschnitt 5 einer zu prüfenden Rohrleitung geführt ist. Eine Druckflasche 2 steht mit dem Windkessel 3 in Verbindung und dient dazu, in dem Kraftstoffkreislauf 1 einen Druck von 4 bar aufrechtzuerhalten. Der Kraftstoff strömt im Kraftstoffkreislauf 1 mit etwa 10 l/h und wird in der Heizeinrichtung 4 auf 70° C aufgeheizt.

Ausserdem umfasst die Anlage einen Trägerkreislauf 6, der an beiden Enden des zu prüfenden Rohrleitungsabschnittes 5 mit diesem verbunden ist. Der Trägerkreislauf 6 ist durch eine Anordnung 7 aus Aktivkohlefiltern hindurchgeführt.

3

Der durch die Wandung des geprüften Rohrleitungsabschnittes 5 permeierte Kraftstoff 8 wird im Trägerkreislauf 6 mit 100 ml/min Stickstoff über die Aktivkohlefilter geleitet und dort nach 300 Stunden gewichtsmässig erfasst.

Die Permeationsprüfungen wurden ebenfalls an Rohrleitungen mit einem Aussendurchmesser von 8 mm und einer Wandstärke von 1 mm durchgeführt.

Die Ergebnisse sind in den Figuren 2 bis 4 als Vergleich zwischen Monorohren aus einzelnen Polyamid-Typen und einem erfindungsgemässen coextrudierten 3-Schicht-Rohr mit dem Aufbau 0.45 mm Grilon XE 3139 / 0.1 mm Grilon T 300 GM / 0.45 mm Grilon XE 3139 wiedergegeben.

Figur 2  Permeation von unverbleitem Superbenzin mit von 5 Gew.-% Ethanol, 3 Gew.-% Methanol, 2 Gew.-% Isopropanol durch 8 x 1 mm Rohre bei 70° C / 4 bar.

Figur 3  Permeation von verbleitem Superbenzin durch 8 x 1 mm Rohre bei 70° C / 4 bar.

Figur 4  Permeation von unverbleitem Superbenzin durch 8 x 1 mm Rohre bei 70° C / 4 bar.

Figur 5  zeigt die Resultate einer sogenannten Aromabestimmung mit dem Treibstoff FAM 15, einer Mischung aus 84,05 Gew.-% FAM, 0,5 Gew.-% Wasser und 15 Gew.-% Methanol (DIN 51604 B) an Monorohren aus Grilon XE 3139 beziehungsweise Grilamid XE 3148. FAM ist ein Gemisch aus 50 Gew.-% Toluol, 30 Gew.-% Isooktan, 15 Gew.-% Di-Isobuten, 5 Gew.-% Ethanol (DIN 51604 B).

4

Tabelle 1

Rohrbeispiele: Aussendurchmesser : 8 mm

Gesamtwandstärke : 1 mm

| Beispiel | Schichtbau | Kälteschlag mit Schlagwerk SAE J 844 d | Kälteschlag mit Schlagwerk ISO 7628 |
|---|---|---|---|
| 1 | Grilon XE 3139   0,45 mm Innen<br>Grilon T300GM   0,10 mm Mitte<br>Grilon XE 3139   0,45 mm Aussen | bestanden | bestanden |
| 2 | Grilon XE 3139   0,60 mm Innen<br>Grilamid ELY20NZ 50% } 0,20 mm Mitte<br>Grilon CA6E   50%<br>Grilamid XE 3148   0,20 mm Aussen | bestanden | bestanden |
| Vergleichs-beispiel | Grilon XE 3139   0,60 mm Innen<br>EVAL F   0,10 mm Mitte<br>Grilon XE 3139   0,30 mm Aussen | nicht bestanden | nicht bestanden |

**Patentansprüche**

1. Kälteschlagzähe, längenstabile und kurzzeitig thermisch überlastbare Kraftstoffleitung für Kraftfahrzeuge, die aus mindestens drei Schichten aus mindestens zwei verschiedenen, miteinander verträglichen

5

Polyamidtypen besteht.

2. Kraftstoffleitung gemäss Anspruch 1, die eine Inne- und eine Aussenschicht aus schlagzähmodifiziertem Polyamid mit oder ohne Weichmachergehalt und eine Sperrschicht in der Mitte der Rohrwandung
aus schlagzähmodifikatorfreiem Homopolyamid, Copolyamid oder deren Blends aufweist.

3. Kraftstoffleitung gemäss Anspruch 2, die eine Sperrschicht aus Polyamid 6.6 aufweist.

4. Kraftstoffleitung gemäss Anspruch 2, die eine Sperrschicht aus einem Blend aus Polyamidelastomeren,
bevorzugt Polyetheresteramid, mit einem Copolyamid, bevorzugt aus Monomeren mit 6 und 12 C-
Atomen aufweist.

5. Kraftstoffleitung gemäss einem der Ansprüche 1 bis 4, die Innen- und Aussenschicht in annähernd
gleicher Dicke, bevorzugt von 0,2 bis 1,0 mm aufweist.

6. Kraftstoffleitung gemäss einem der Ansprüche 1 bis 5, die eine Sperrschicht mit einer Dicke von 5 bis
25% der Gesamtwanddicke, bevorzugt 0,1 bis 0,5 mm aufweist.

7. Kraftstoffleitung gemäss Anspruch 4, die eine Innenschicht aus schlagzähmodifiziertem Polyamid 6 und
eine Aussenschicht aus schlagzähmodifiziertem Polyamid 12 aufweist.

8. Kraftstoffleitung gemäss Anspruch 3, die eine Innen- und eine Aussenschicht aus schlagzähmodifiziertem Polyamid 6 aufweist.

9. Kraftstoffleitung nach einem der Ansprüche 1 bis 8, die durch Koextrusion hergestellt worden ist.

FIG. 1

FIG. 2

FIG. 3

FIG. 4

FIG. 5